# FASCICULE DE BREVET EUROPEEN

(11) **EP 0 927 136 B1**
(45) Date de publication et mention de la délivrance du brevet: **07.06.2000**
(21) Numéro de dépôt: 97940189.0
(22) Date de dépôt: 08.09.1997
(51) Int. Cl.: B65G 59/06

(54) **DISPOSITIF DE DISTRIBUTION DE PALETTES**
VORRICHTUNG ZUM AUSGEBEN VON PALETTEN
DEVICE FOR DISPENSING PALLETS

(30) Priorité: 09.09.1996 FR 9610958
(43) Date de publication de la demande: 07.07.1999
(73) Titulaire: Réalisations, Etudes & Commercialisation de Matériel pour l'Industrie, RECMI, 72400 La Ferté Bernard (FR)
(72) Inventeur: BODEREAU, Jean-Pierre, F-72400 La Ferte Bernard (FR)
(74) Mandataire: Dawidowicz, Armand
(86) Numéro de dépôt international: FR9701574
(87) Numéro de publication internationale: WO9809898

(56) Documents cités:
- DE-A- 3 439 976
- US-A- 3 428 192
- US-A- 4 624 616

## Description

La présente invention concerne un dispositif de distribution de palettes du type permettant l'alimentation en palettes d'un convoyeur amenant une palette, par exemple, vers un poste de chargement de la palette.

Dans le cadre d'une installation de chargement de palettes par des produits, tels que des piles de cahiers imprimés par exemple, il convient d'amener les palettes une à une au poste de chargement par l'intermédiaire d'un convoyeur tel qu'un tapis roulant. A cet effet, il est habituel d'amener à l'entrée du convoyeur une pile de palettes, puis de séparer la palette la plus inférieure de la pile et de la centrer sur le convoyeur afin que ce dernier l'amène correctement au poste de chargement.

On connaît, par US-A-4 624 616, un dispositif permettant la délivrance de la palette la plus inférieure d'une pile de palettes. La pile de palettes est positionnée dans une colonne présentant une paroi arrière et deux parois latérales, lesdites parois latérales opposées présentant des roues motrices. La pile de palettes est positionnée au-dessus desdites roues motrices qui, lorsqu'elles sont actionnées, entraînent les palettes vers le bas de la colonne. Les parois latérales sont en outre pourvues de barres de guidage verticales qui, montées pivotantes de manière à être amenées en saillie vers l'intérieur de la colonne, permettent le centrage des palettes arrivant sur les roues motrices.

Afin d'entraîner les palettes, l'espace défini entre les roues motrices est inférieur aux dimensions des palettes de sorte que celles-ci sont engagées à force entre les roues motrices. Il existe donc un risque d'endommagement desdites palettes et, en outre, ce dispositif présente l'inconvénient de n'accueillir qu'un format de palettes.

La séparation de la palette la plus inférieure par rapport à la pile de palettes s'effectue, le plus souvent, en soulevant toutes les palettes situées au-dessus de la palette la plus inférieure. Ensuite, on guide, sur le convoyeur, la palette libérée afin de la positionner de manière correcte sur ledit convoyeur.

Ainsi, on connaît des dispositifs de distribution de palettes dans lesquels au moins un organe de levage ayant une partie de saisie d'une palette, soulève la pile de palettes située au-dessus de la palette la plus inférieure et sépare ainsi ladite palette la plus inférieure du reste de la pile, par exemple, en entraînant en déplacement le convoyeur sur lequel elle repose pour l'évacuer.

Afin de centrer la palette libérée sur le convoyeur, ces dispositifs peuvent comporter, en outre, un système de pressage ou de taquage guidant la palette sur le convoyeur.

Par conséquent, il est nécessaire d'avoir recours d'une part à un dispositif permettant de soulever la pile de palettes pour libérer la palette la plus inférieure et d'autre part à un système de centrage de la palette libérée sur le convoyeur. Il est donc indispensable d'utiliser ces deux dispositifs pour obtenir une mise en place correcte d'une palette sur le convoyeur afin de permettre un entraînement approprié de la palette par le convoyeur jusqu'à un poste de chargement, par exemple. Ceci entraîne un encombrement relativement important à l'entrée du convoyeur ainsi qu'un coût relativement élevé.

De plus, on ne peut généralement pas utiliser un même dispositif de distribution de palettes pour des palettes de format différent.

Ainsi, on connaît par US-A-3 428 192, un dispositif de distribution de blocs de construction empilés dans lequel des éléments de serrage sont apposés sur des faces opposées du bloc le plus inférieur de la pile de manière à abaisser l'ensemble de la pile jusqu'à une surface de réception, puis les éléments de serrage sont engagés de part et d'autre du bloc au-dessus du bloc le plus inférieur de manière à soulever la pile et libérer le bloc le plus inférieur. Ce dispositif est installé dans un magasin présentant une paroi arrière et des parois latérales portant le mécanisme élévateur et les éléments de serrage, ce magasin étant monté au-dessus d'un convoyeur, les éléments de serrage se déplaçant horizontalement selon l'axe de déplacement du convoyeur. Un tel dispositif utilisé sur des blocs de construction entraîne une force de compression assez importante pour maintenir le bloc le plus inférieur suffisamment rigide pour supporter le poids de la pile et, par ailleurs, on ne prévoit pas de centrage ni de pouvoir utiliser ce dispositif pour des dimensions de blocs différentes.

On connaît également, par DE-A-34 39 976, un dispositif comprenant deux bras de préhension déplaçables en pivotement synchrone dans un plan horizontal et agissant comme une pince. Ces bras s'étendent parallèlement l'un à l'autre le long des bords opposés d'une palette en position de saisie et s'ouvrent pour libérer la palette. Une extrémité de chaque bras est montée sur un arbre s'étendant perpendiculairement audit bras, les arbres étant liés l'un à l'autre à l'aide d'une roue dentée. Lorsque l'un des arbres est entraîné en pivotement par l'intermédiaire d'un cylindre à piston, on provoque l'entraînement en pivotement dans un plan horizontal du bras qu'il porte et l'entraînement en pivotement du second arbre et du bras qu'il porte par l'intermédiaire de la roue dentée.

Le dispositif fonctionne par conséquent comme une pince dont les bras s'étendent parallèles l'un à l'autre en position de saisie d'une palette et s'écartent l'un de l'autre pour lâcher la palette. De ce fait, ce type de dispositif ne permet pas un centrage de la palette du fait d'un risque d'endommagement de ladite palette.

En outre, la configuration des bras pivotants est telle que l'espace ménagé entre eux pour saisir une palette correspond à un type de format de palette et ne peut fonctionner pour des formats de palettes différents.

Afin de pallier ces inconvénients, la présente invention propose un dispositif de distribution de palettes permettant de réaliser à la fois la fonction de séparation et la fonction de centrage d'une palette sur un convoyeur et ce quelque soit le format des palettes, tout en présentant une structure simple et de réalisation peu coûteuse.

A cet effet, l'invention a pour objet un dispositif de distribution de palettes du type comportant deux organes de levage disposés de part et d'autre d'un convoyeur, lesdits organes de levage étant pourvus d'éléments de préhension propres à saisir une palette d'une pile de palettes reposant sur ledit convoyeur, les éléments de préhension étant déplaçables en translation verticale par lesdits organes de levage, caractérisé en ce que les deux organes de levage sont entraînables en translation horizontale selon un axe de déplacement reliant les deux organes de levage, ladite translation horizontale permettant le rapprochement et l'écartement des éléments de préhension pour saisir ou libérer une palette, lesdits éléments de préhension agissant, en outre, en tant qu'éléments de centrage, l'entraînement en translation des organes de levage permettant de centrer une palette saisie par rapport au convoyeur.

De manière avantageuse, les organes de levage sont entraînés en translation horizontale de manière synchrone de telle sorte que, lesdits organes étant montés de part et d'autre du convoyeur à égale distance de celui-ci, l'intervalle défini entre lesdits organes de levage est centré par rapport audit convoyeur. Ainsi quelque soit l'intervalle défini entre lesdits organes de levage, celui-ci est toujours centré par rapport au convoyeur.

Ainsi, de manière avantageuse, une palette saisie par les éléments de préhension et de centrage desdits organes de levage définit un intervalle entre lesdits organes de levage qui est centré par rapport au convoyeur, ladite palette étant ainsi centrée.

De ce fait, le rapprochement synchrone des organes de levage permet de centrer de manière simple et efficace une palette saisie par les éléments de préhension et de centrage desdits organes de levage et ce quelque soit le format de ladite palette.

De manière avantageuse, le dispositif comprend au moins un moyen d'entraînement en translation horizontale d'au moins un organe de levage couplé à un dispositif de renvoi commandant l'entraînement en translation horizontale correspondante de l'autre organe de levage afin d'amener de part et d'autre d'une palette, reposant sur le convoyeur, les éléments de préhension fixés sur lesdits organes de levage ou d'écarter lesdits organes de levage l'un de l'autre afin d'éloigner les éléments de préhension de la palette.

Par conséquent, les organes de levage sont entraînés en translation horizontale, de préférence, entre deux positions correspondant pour l'une à un intervalle suffisant entre les deux organes de levage pour mettre en place une pile de palettes sur le convoyeur et pour l'autre correspondant à la position de centrage d'une palette saisie par les éléments de préhension.

De préférence, afin de commander l'arrêt de l'entraînement en rapprochement des organes de levage, lorsque la palette saisie par les éléments de préhension est centrée, on prévoit sur chaque élément de préhension un moyen de détection associé propre à détecter la saisie correcte de la palette par l'élément de préhension. Ainsi, lorsqu'un seul moyen de détection a détecté la saisie correcte de la palette par l'élément de préhension associé, l'entraînement en rapprochement des organes de levage continue puis, lorsque le second moyen de détection a détecté la saisie correcte de la palette par l'élément de préhension associé, on peut stopper l'entraînement en rapprochement des organes de levage. Ainsi, aucun réglage n'est nécessaire pour passer d'un format de palettes à un autre, la reconnaissance du format de la palette s'effectuant par la détection de la saisie correcte de la palette, par exemple par la mise en butée des éléments de préhension sur la palette.

Selon l'invention, les organes de levage peuvent être des vérins de type mécanique ou hydraulique ou pneumatique. Un élément de préhension est fixé sur chaque organe de levage de telle sorte que l'actionnement de l'organe de levage commande la translation verticale de l'élément de préhension.

Les organes de levage sont, de préférence, entraînés en translation verticale selon au moins trois positions distinctes. La première position, la plus basse, permet de saisir la palette la plus inférieure d'une pile lorsqu'on débute un cycle de distribution de palettes, ou de déposer la pile de palettes qui a été soulevée ; la deuxième position permet de saisir la palette située au-dessus de la palette la plus inférieure et ; la troisième position permet de soulever la pile de palettes pour la séparer de la palette la plus inférieure ou du convoyeur sur lequel elle repose.

Le cycle de fonctionnement d'un dispositif de distribution de palettes selon l'invention est le suivant : lorsqu'une nouvelle pile de palettes est amenée sur le convoyeur entre les deux organes de levage du dispositif de distribution de palettes, les organes de levage sont à la position la plus écartée l'un de l'autre de manière à permettre la dépose de la pile de palettes sur le convoyeur.

Les organes de levage sont positionnés à la première position verticale et sont entraînés en translation horizontale en rapprochement l'un de l'autre, de telle sorte que les éléments de préhension saisissent la palette la plus inférieure de la pile.

Le rapprochement des organes de levage se fait à faible pression de manière à engager les éléments de préhension sur la palette, lesdits éléments ne jouant pas encore le rôle d'éléments de centrage.

Puis, les organes de levage sont entraînés en translation verticale jusqu'à la troisième position de manière à soulever la palette saisie et les palettes de la pile se trouvant au-dessus.

Les organes de levage sont alors de nouveau entraînés en translation horizontale, en rapprochement l'un de l'autre à pression normale, jusqu'à la position correspondant au centrage de la palette saisie par rapport au convoyeur. On abaisse ensuite les organes de levage à la position verticale la plus basse, pour reposer la pile de palette sur le convoyeur.

Les organes de levage sont alors entraînés en translation horizontale, en écartement l'un de l'autre, pour libérer la palette.

On amène ensuite les organes de levage à la deuxième position verticale de manière à saisir la palette au-dessus de la palette la plus inférieure. On saisit ladite palette au-dessus de la palette la plus inférieure en rapprochant les organes de levage l'un de l'autre, on soulève la pile de palette séparant ladite pile de la palette la plus inférieure qui reste sur le convoyeur.

Cette palette ainsi séparée du reste de la pile, ayant été précédemment convenablement centrée par rapport au convoyeur, peut alors être évacuée par ledit convoyeur.

Les organes de levage, quant à eux, sont de nouveau entraînés en translation horizontale de manière à centrer la palette saisie puis sont abaissés vers la première position verticale afin de redéposer la pile de palettes. Ils sont ensuite écartés pour libérer la nouvelle palette la plus inférieure. Le cycle continue ainsi jusqu'à l'achèvement de la distribution des palettes de la pile de palettes.

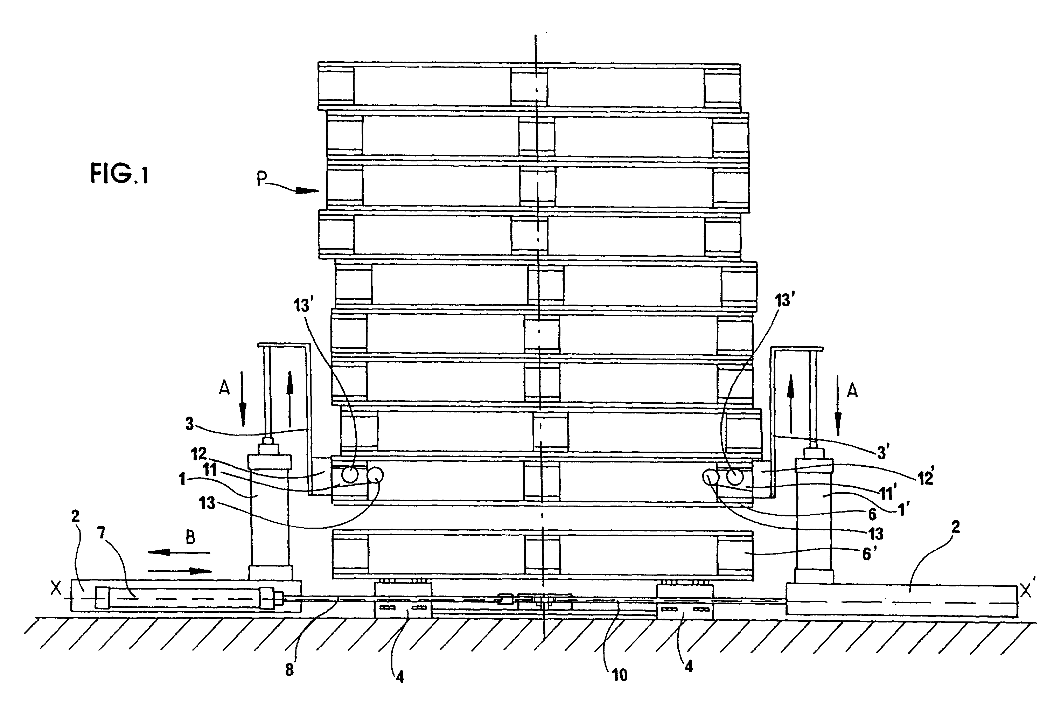

On décrira maintenant l'invention plus en détail en référence au dessin annexé dans lequel la figure unique représente une vue de côté d'un exemple de dispositif de distribution de palettes selon l'invention.

Un dispositif de distribution de palettes selon l'invention comporte deux organes de levage 1, 1' tel qu'un vérin, montés respectivement sur des bases 2 et 2', ledit organe de levage 1, 1' étant actionnable selon une direction verticale perpendiculaire au plan de la base 2, 2' représentée par la double flèche A.

Les organes de levage 1, 1' sont disposés en regard l'un de l'autre, de part et d'autre à égale distance d'un convoyeur 4 sur lequel peut être mise en place une pile P de palettes 6.

Les organes de levage 1, 1' sont déplaçables horizontalement en rapprochement et en écartement l'un de l'autre, selon un axe de déplacement XX' perpendiculaire à l'axe de déplacement longitudinal YY' du convoyeur 4 selon la direction de la double flèche B.

Afin de saisir une palette 6, les organes de levage 1, 1' sont munis respectivement d'éléments de préhension et de centrage 3, 3'.

Lors de la saisie d'une palette 6, les organes de levage 1, 1' sont entraînés en translation en synchronisme de manière à être rapprochés l'un de l'autre, les éléments de préhension et de centrage 3, 3' venant en contact de la palette 6 de part et d'autre de celle-ci. Pour libérer la palette 6 ayant été saisie, les organes de levage 1, 1' sont entraînés en translation horizontale de manière à s'écarter l'un de l'autre.

De préférence, l'entraînement en translation horizontale des organes de levage 1, 1' est obtenu entre deux positions limites des organes de levage 1, 1'. Ainsi, la première position correspond à un écartement des organes de levage 1, 1' propre à permettre la mise en place d'une pile P de palettes 6 entre lesdits organes de levage 1, 1' sur le convoyeur 4. La seconde position correspond à une position de centrage d'une palette 6 saisie par rapport au convoyeur 4.

De manière à obtenir correctement ces deux positions, les organes de levage 1, 1' sont entraînés en translation horizontale de manière synchrone. A cet effet, le dispositif comporte un moyen d'entraînement en translation horizontale du premier organe de levage 1 couplé à un dispositif de renvoi commandant l'entraînement en translation horizontale correspondante de l'autre organe de levage 1'.

Selon le mode de réalisation de l'exemple représenté, l'organe de levage 1 est relié au second organe de levage 1' par un dispositif du type pignon et crémaillère de renvoi. Tout dispositif d'actionnement de l'un des organes de levage et de renvoi pour actionner l'autre organe connu en soi est approprié. De même, il est envisageable de prévoir un moyen d'entraînement en translation pour chaque organe de levage 1, 1', l'entraînement synchrone des deux moyens d'entraînement pouvant être obtenu par des moyens usuels de commande en synchronisme par exemple.

Ainsi, la base 2 sur laquelle est monté l'organe de levage 1 comporte un organe d'entraînement en translation 7, tel qu'un vérin, auquel est reliée la partie inférieure dudit organe de levage 1 et dont une partie telle qu'une tige 8 s'étend au-dessous du convoyeur 4 en direction du second organe de levage 1'. De préférence, la base 2 est fixe, ladite base 2 et l'organe de levage 1 comportant des moyens complémentaires propres à permettre le déplacement de l'organe de levage 1 par rapport à la base 2, sous l'effet du moyen d'entraînement en translation 7.

La tige 8 est propre à venir en prise, sous le convoyeur 4 avec une crémaillère également en prise avec une tige 10 appropriée et reliée à l'organe de levage 1'. La base 2' peut être fixe, ladite base 2' et l'organe de levage 1' comportant des moyens complémentaires propres à permettre le déplacement de l'organe de base 1', par rapport à la base 2' sous l'effet de l'actionnement de la tige 10.

Au contraire, ladite base 2' peut être mobile sous l'effet de l'actionnement de la tige 10, l'organe de levage 1' étant monté fixe dessus.

Ainsi, l'actionnement de l'organe d'entraînement en translation du premier organe de levage 1, provoque le déplacement de la tige 8 qui actionne la crémaillère qui entraîne en déplacement la tige 10 du second organe de levage 1'. Le déplacement horizontal du premier organe de levage 1 selon la direction vers la gauche du dessin provoque le déplacement horizontal du second organe de levage 1' dans la direction vers la droite du dessin de manière à rapprocher en synchronisme les organes de levage 1, 1'.

Les éléments de préhension et de centrage 3, 3' comportent respectivement deux dispositifs de roulement 11, 11' propres à s'insérer entre les plots d'une palette 6, et montés perpendiculaires à un élément de butée 12, 12' de telle sorte que, lors de la saisie d'une palette 6 par les éléments de préhension 3, 3', les dispositifs de roulement 11, 11' se glissent sous le plancher de la palette 6 et, lors du centrage, les éléments de butée 12, 12' s'étendent le long des flancs opposés de la palette 6.

Ainsi, on introduit d'abord les dispositifs de roulement 11, 11' sous une palette afin de la saisir pour la soulever puis on rapproche à nouveau les organes de levage de telle sorte que les éléments de butée 12, 12' viennent s'étendre le long des flancs opposés de la palette saisie. Une palette mal centrée par rapport au convoyeur est, de ce fait, parfaitement centrée par lesdits éléments de centrage 3, 3'. De préférence, on prévoit un moyen de détection (non représenté) associé à chaque élément de centrage 3, 3' et propre à détecter la mise en butée des éléments de butée 12, 12' le long des flancs de la palette saisie, détectant ainsi une saisie correcte et centrée de la palette 6. La détection de la saisie correcte de la palette 6 permet, par exemple, de commander l'entraînement en rapprochement des organes de levage 1, 1'.

Au cours du cycle de fonctionnement du dispositif, une pile P de palettes 6 est positionnée entre les organes de levage 1, 1' sur un convoyeur 4 tel qu'un tapis roulant constitué de deux bandes, par exemple.

Les éléments de préhension 3, 3' sont à la deuxième position verticale des organes de levage 1, 1', c'est-à-dire au niveau de la palette 6 se trouvant au-dessus de la palette 6' la plus inférieure dans la pile P.

La saisie de la palette 6 se fait par un premier mouvement en translation horizontale des organes de levage 1, 1' qui se rapprochent et sont insérés de chaque côté de la palette 6 à l'intérieur des plots de ladite palette 6. L'insertion des éléments de préhension et de centrage 3 et 3' se fait à faible pression, par exemple en temporisant le rapprochement des organes de levage 1, 1', de manière à permettre une insertion des dispositifs de roulement 11 et 11' sous la palette 6 suffisante pour soulever ladite palette 6. Par contre, le rapprochement des organes de levage 1, 1' n'est pas encore suffisant pour permettre le centrage de la palette saisie. On évite ainsi de décentrer la palette la plus inférieure 6' sur laquelle repose la palette saisie 6.

Chaque dispositif de roulement 11, 11' comporte, de préférence, deux roulettes 13, 13' dont au moins la roulette 13 la plus extérieure s'insère sous la palette 6 lors de ce premier mouvement en translation horizontale.

Puis, par un mouvement en translation verticale vers le haut jusqu'à la troisième position verticale des organes de levage 1, 1', on soulève la palette 6 et les palettes au-dessus de la palette 6 saisie, séparant ainsi la palette 6' qui reste sur le convoyeur 4.

On poursuit ensuite le mouvement de rapprochement horizontal à pression normale des organes de levage 1, 1' jusqu'à la position limite de rapprochement des deux organes de levage 1, 1' de part et d'autre de la palette saisie 6 correspondant à une position de centrage de la palette 6 par rapport au convoyeur, les éléments de butée 12, 12' des éléments de préhension 3, 3' agissant sur la palette 6 pour la positionner correctement.

Une seconde roulette 13' des dispositifs de roulement permet, lors de ce mouvement en translation horizontale des organes de levage 1,1', une utilisation du dispositif selon l'invention même avec des palettes dont le plancher n'est pas plein, la présence de cette seconde roulette 13' prévenant un blocage du dispositif lorsque la première roulette 13 n'est plus en contact avec le plancher de la palette par exemple.

La palette 6' restant sur le convoyeur 4 est alors évacuée par ledit convoyeur 4 vers un poste de chargement, par exemple.

On abaisse alors les organes de levage 1, 1' jusqu'à leur première position verticale, position la plus inférieure permettant le dépôt de la pile P de palettes et en particulier le dépôt de la palette 6 correctement centrée sur le convoyeur 4.

On actionne ensuite les organes de levage 1, 1' en translation horizontale de manière à les écarter et à retirer, par conséquent, les éléments de préhension 3, 3' de la palette 6.

Il convient alors, pour libérer la palette 6 devenue la palette la plus inférieure, de saisir la pile P de palettes par l'intermédiaire de la palette 6'' se trouvant au-dessus de la palette 6 la plus inférieure en amenant les organes de levage 1, 1' à leur deuxième position verticale.

Le dispositif de distribution de palettes selon l'invention permet la distribution des palettes une à une à partir d'une pile de palettes, les palettes étant correctement centrées une à une sur le convoyeur par les organes de levage dudit dispositif.

## Revendications

1. Dispositif de distribution de palettes du type comportant deux organes de levage (1, 1') disposés de part et d'autre d'un convoyeur (4), lesdits organes de levage (1, 1') étant pourvus d'éléments de préhension (3, 3') propres à saisir une palette (6) d'une pile (P) de palettes reposant sur ledit convoyeur (4), les éléments de préhension (3, 3') étant déplaçables en translation verticale par lesdits organes de levage (1, 1'),
caractérisé en ce que les deux organes de levage (1, 1') sont, en outre, entraînables en translation horizontale selon un axe de déplacement reliant les deux organes de levage, ladite translation horizontale permettant le rapprochement et l'écartement des éléments de préhension (3, 3') pour saisir ou libérer une palette, lesdits éléments de préhension (3, 3') agissant, en outre, en tant qu'éléments de centrage, l'entraînement en translation des organes de levage (1, 1') permettant de centrer une palette (6) saisie par rapport au convoyeur (4).

2. Dispositif selon la revendication 1,
caractérisé en ce que les organes de levage (1, 1'), disposés de part et d'autre du convoyeur à égale distance de celui-ci, sont entraînés en translation horizontale de manière synchrone.

3. Dispositif selon la revendication 2,
caractérisé en ce qu'il comprend au moins un moyen d'entraînement en translation horizontale d'un organe de levage (1) couplé à un dispositif de renvoi commandant l'entraînement en translation horizontale correspondante de l'autre organe de levage (1').

4. Dispositif selon la revendication 3,
caractérisé en ce qu'un organe de levage (1) est monté mobile sur une base (2) fixe renfermant ledit moyen d'entraînement en translation, ladite base (2) et ledit organe de levage (1) comportant des moyens complémentaires propres à permettre le déplacement dudit organe de levage (1) par rapport à la base (2) sous l'effet du moyen d'entraînement.

5. Dispositif selon la revendication 4,
caractérisé en ce que l'organe de levage (1') est monté mobile sur une base (2'), ladite base (2') et ledit organe de levage (1') comportant des moyens complémentaires propres à permettre le déplacement en translation horizontale de l'organe d levage (1') par rapport à la base (2').

6. Dispositif selon la revendication 4,
caractérisé en ce que le second organe de levage (1') est monté fixé sur une base mobile (2').

7. Dispositif selon l'une des revendications 3 à 6,
caractérisé en ce que le moyen d'entraînement est un vérin (7) pourvu d'une tige (8) s'étendant sous le convoyeur (4) en direction de l'organe de levage (1'), ladite tige (8) étant propre à coopérer avec une crémaillère qui est également en prise avec une tige appropriée (10) à laquelle est relié ledit organe de levage (1').

8. Dispositif selon l'une des revendications 1 à 7,
caractérisé en ce que les organes de levage (1, 1') sont des vérins positionnables à au moins trois positions verticales distinctes.

9. Dispositif selon l'une des revendications 1 à 8,
caractérisé en ce que les éléments de préhension et de centrage (3, 3') comportent respectivement deux dispositifs de roulement (11, 11') propres à s'insérer entre les plots d'une palette (6), et montés perpendiculaires à un élément de butée (12, 12') de telle sorte que, lors de la saisie et du centrage d'une palette (6) par les éléments de préhension (3, 3'), les dispositifs de roulement (11, il') se glissent sous le plancher de la palette (6) et les éléments de butée (12, 12') s'étendent le long des flancs opposés de la palette (6).

10. Dispositif selon la revendication 9,
caractérisé en ce que chaque dispositif de roulement (11) comporte deux roulettes (13, 13').

11. Dispositif selon l'une des revendications 1 à 9,
caractérisé en ce qu'un moyen de détection est associé à chaque élément de préhension (3, 3') de manière à détecter une saisie correcte d'une palette par ledit élément de préhension (3, 3').

## Patentansprüche

1. Vorrichtung zum Ausgeben von Paletten, umfassend zwei Hebeorgane (1, 1'), die beiderseits einer Fördereinrichtung (4) angeordnet sind, wobei die besagten Hebeorgane (1, 1') mit Greifelementen (3, 3') versehen sind, die eine Palette (6) von einem auf der besagten Fördereinrichtung (4) aufliegenden Palettenstapel (P) greifen können, wobei die Greifelemente (3, 3') durch die besagten Hebeorgane (1, 1') vertikal geradlinig verschiebbar sind,
**dadurch gekennzeichnet**, daß die zwei Hebeorgane (1, 1') außerdem entlang einer die zwei Hebeorgane verbindenden Verschiebungsachse horizontal geradlinig antreibbar sind, wobei die besagte horizontale geradlinige Verschiebung die Annäherung und die Entfernung der Greifelemente (3, 3') ermöglicht, um eine Palette zu greifen oder freizugeben, wobei die besagten Greifelemente (3, 3') außerdem als Zentrierelemente wirken, wobei der geradlinige Antrieb der Hebeorgane (1, 1') die Zentrierung einer gegriffenen Palette (6) im Verhältnis zur Fördereinrichtung (4) ermöglicht.

2. Vorrichtung nach Anspruch 1,
**dadurch gekennzeichnet**, daß die Hebeorgane (1, 1'), die beiderseits der Fördereinrichtung abstandsgleich zu dieser angeordnet sind, synchron horizontal geradlinig angetrieben werden.

3. Vorrichtung nach Anspruch 2,
**dadurch gekennzeichnet**, daß sie wenigstens ein Mittel zum geradlinigen horizontalen Antrieb eines Hebeorgans (1) umfaßt, das mit einer Umlenkvorrichtung verbunden ist, die den entsprechenden horizontalen geradlinigen Antrieb des anderen Hebeorgans (1') steuert.

4. Vorrichtung nach Anspruch 3,
**dadurch gekennzeichnet**, daß ein Hebeorgan (1) beweglich auf einer ortsfesten Grundfläche (2) gelagert ist, die das besagte Mittel zum geradlinigen Antrieb verschließt, wobei die besagte Grundfläche (2) und das besagte Hebeorgan (1) komplementäre Mittel umfassen, um die Verschiebung des besagten Hebeorgans (1) im Verhältnis zur Grundfläche (2) unter der Einwirkung des Antriebsmittels zu ermöglichen.

5. Vorrichtung nach Anspruch 4,
**dadurch gekennzeichnet**, daß das Hebeorgan (1') beweglich auf einer Grundfläche (2') gelagert ist, wobei die besagte Grundfläche (2') und das besagte Hebeorgan (1') komplementäre Mittel umfassen, um die horizontale geradlinige Verschiebung des Hebeorgans (1') im Verhältnis zur Grundfläche (2') zu ermöglichen.

6. Vorrichtung nach Anspruch 4,
**dadurch gekennzeichnet**, daß das zweite Hebeorgan (1') ortsfest auf einer beweglichen Grundfläche (2') gelagert ist.

7. Vorrichtung nach einem der Ansprüche 3 bis 6,
**dadurch gekennzeichnet**, daß das Antriebsorgan ein Zylinder (7) mit einer Stange (8) ist, die sich unter der Fördereinrichtung (4) in Richtung des Hebeorgans (1') erstreckt, wobei die besagte Stange (8) mit einer Zahnstange zusammenwirken kann, die sich außerdem mit einer geeigneten Stange (10) im Eingriff befindet, mit der das besagte Hebeorgan (1') verbunden ist.

8. Vorrichtung nach einem der Ansprüche 1 bis 7,
**dadurch gekennzeichnet**, daß die Hebeorgane (1, 1') Zylinder sind, die in wenigstens drei verschiedenen vertikalen Positionen positionierbar sind.

9. Vorrichtung nach einem der Ansprüche 1 bis 8,
**dadurch gekennzeichnet**, daß die Greif- und Zentrierorgane (3, 3') zwei Rollvorrichtungen (11, 11') umfassen, die sich zwischen den Ansätzen einer Palette (6) einfügen können und senkrecht zu einem Anschlagelement (12, 12') angebracht sind, so daß beim Greifen und Zentrieren einer Palette (6) durch die Greifelemente (3, 3') die Rollvorrichtungen (11, 11') unter die Platte der Palette (6) gleiten und sich die Anschlagelemente (12, 12') entlang den gegenüberliegenden Flanken der Palette (6) erstrecken.

10. Vorrichtung nach Anspruch 9,
**dadurch gekennzeichnet**, daß jede Rollvorrichtung (11) zwei Rollen (13, 13') umfaßt.

11. Vorrichtung nach einem der Ansprüche 1 bis 9,
**dadurch gekennzeichnet**, daß jedem Greifmittel (3, 3') ein Erfassungsmittel zugeordnet ist, um ein korrektes Greifen einer Palette durch das besagte Greifelement (3, 3') zu erfassen.

## Claims

1. Apparatus for dispensing pallets of the type comprising two lifting means (1, 1') disposed on each side of a conveyor (4), said lifting means (1, 1') being provided with gripping elements (3, 3') suitable for seizing a pallet (6) from a pile (P) of pallets resting on said conveyor (4), the gripping elements (3, 3') being vertically displaceable by said lifting means (1, 1'), characterised in that the two lifting means (1, 1') are, moreover, horizontally entrainable along a displacement axis connecting the two lifting means, said horizontal movement permitting the gripping elements (3, 3') to approach and to move away from each other to seize or release a pallet, said gripping elements (3, 3') acting, moreover, as centring elements, the entrainment of the lifting means (1, 1') permitting a seized pallet (6) to be centred relative to the conveyor (4).

2. Apparatus according to claim 1, characterised in that the lifting means (1, 1'), disposed on each side of the conveyor at an equal distance therefrom, are horizontally entrained in a synchronous manner.

3. Apparatus according to claim 2, characterised in that it comprises at least one means of horizontal entrainment for a lifting means (1), coupled to a counter-device controlling the corresponding horizontal entrainment of the other lifting means (1').

4. Apparatus according to claim 3, characterised in that one lifting means (1) is displaceably mounted on a fixed base (2) enclosing said entrainment means, said base (2) and said lifting means (1) comprising complementary means suitable for permitting the displacement of said lifting means (1) relative to the base (2) by means of the entrainment means.

5. Apparatus according to claim 4, characterised in that the lifting means (1') is displaceably mounted on a base (2'), said base (2') and said lifting means (1') comprising complementary means suitable for permitting the horizontal displacement of the lifting means (1') relative to the base (2').

6. Apparatus according to claim 4, characterised in that the second lifting means (1') is mounted secured on a displaceable base (2').

7. Apparatus according to one of claims 3 to 6, characterised in that the entrainment means is a jack (7), provided with a bar (8) extending under the conveyor (4) in the direction of the lifting means (1'), said bar (8) being suitable for co-operating with a rack which is also in contact with an appropriate bar (10) to which said lifting means (1') is connected.

8. Apparatus according to one of claims 1 to 7, characterised in that the lifting means (1, 1') are jacks positionable in at least three distinct vertical positions.

9. Apparatus according to one of claims 1 to 8, characterised in that the gripping and centring means (3, 3') respectively comprise two roller devices (11, 11'), suitable for insertion between the blocks of a pallet (6) and mounted perpendicular to a stop member (12, 12'), so that, when a pallet (6) is seized and centred by the gripping elements (3, 3'), the roller devices (11, 11') slide under the floor of the pallet (6) and the stop members (12, 12') extend along the opposite sides of the pallet (6).

10. Apparatus according to claim 9, characterised in that each roller device (11) comprises two rollers (13, 13').

11. Apparatus according to one of claims 1 to 9, characterised in that a means of detection is associated with each gripping element (3, 3'), so as to detect the correct Seizure of a pallet by said gripping means (3, 3').
